# EUROPEAN PATENT APPLICATION

(11) **EP 4 328 471 A1**
(43) Date of publication of application: **28.02.2024**
(21) Application number: 22191792.5
(22) Date of filing: 23.08.2022
(51) Int. Cl.: F16K 15/06, F16K 17/04, F16K 1/44

(54) **PRESSURE RELIEF VALVE**

(71) Applicant: B/E Aerospace Inc., Winston Salem, NC 27105 (US)
(72) Inventor: SABAN, Christopher Ryan, Santa Rosa City (PH)
(74) Representative: Dehns

(57) **Abstract**

A pressure relief valve comprises a base attachable to the pressure vessel at a vessel aperture, the base comprising a base face, the base face facing away from the vessel; a cap comprising a cap face, the cap face facing towards the vessel, the cap movable between an open position and a closed position, wherein in the closed position the cap seals the vessel aperture and in the open position flow through the vessel aperture is permitted to relieve pressure in the pressure vessel; and a gasket between the base face and the cap face, wherein in the closed position: the base face and the cap face contact the gasket at a first location to form a first seal; and the base face and the cap face contact the gasket at a second location to form a second seal.

## Description

This disclosure relates to pressure relief valves.

### BACKGROUND

Pressure relief valves may be fixed to a vessel aperture to seal the vessel aperture and prevent fluid flow through the vessel aperture in normal use. During a pressure relief event, when the pressure in the pressure vessel exceeds a threshold, the pressure relief valve opens, permitting fluid flow through the vessel aperture and allowing the pressure in the pressure vessel to be relieved. The components of the pressure relief valve may experience high forces during the pressure relief event, which may damage the components, potentially reducing the effectiveness of the seal provided by the pressure relief valve.

### SUMMARY

According to an aspect of this disclosure there is provided a pressure relief valve for a pressure vessel. The pressure relief valve comprises a base attachable to the pressure vessel at a vessel aperture, the base comprising a base face, the base face facing away from the vessel. The pressure relief valve comprises a cap comprising a cap face, the cap face facing towards the vessel, the cap movable between an open position and a closed position, wherein in the closed position the cap seals the vessel aperture and in the open position flow through the vessel aperture is permitted to relieve pressure in the pressure vessel. The pressure relief valve comprises a gasket between the base face and the cap face. In the closed position the base face and the cap face contact the gasket at a first location to form a first seal. In the closed position the base face and the cap face contact the gasket at a second location to form a second seal.

By contacting the gasket with the base face and the cap face at first and second locations to form first and second seals, the reliability of the seal provided by the pressure vessel may be improved, in particular in pressure vessels where high forces during pressure relief events may cause damage to the gasket or to other components of the pressure relief valve.

In some examples, the gasket is a flat gasket. This may be cheaper to manufacture and may permit the design of the other components (e.g. the cap and the base) to be simplified.

In some examples, the first location and the second location lie in a sealing plane, wherein the sealing plane is substantially parallel to a plane of the vessel aperture.

In some examples, the base face is substantially planar.

In some examples, the pressure relief valve is configured to form a third seal, the third seal formed between faces aligned to a plane that is not parallel to that of the first and second seals. By providing a third seal in a different plane from the first and second seals, sealing of the valve is further improved. Additionally, sealing in a different plane (e.g. parallel to the direction in which the cap moves from the open position to the closed position) may permit the third seal to be maintained after the first and second seals are broken.

In some examples, the cap is movable to an intermediate position between the open and closed positions, wherein in the intermediate position the first and second seals are broken but the third seal is maintained.

In some examples, the pressure relief valve comprises a side face, the side face extending away from the aperture, wherein in the closed position an edge of the gasket contacts the side face to form the third seal.

In some examples, the cap comprises the side face. In some examples, the cap comprises a skirt, wherein in the closed position the skirt surrounds the base and the side face is an inner face of the skirt.

In some examples, the edge of the gasket is configured to flex during movement of the cap from the open position to the closed position. This may improve the sealing of the third seal as the cap moves, and may prevent damage to the gasket.

In some examples, the pressure relief valve comprises a retainer, the retainer fixing the gasket to the base. In some examples, the gasket is held between the retainer and the base. This may prevent propagation of cracks through the gasket. In some examples, the pressure relief valve comprises an adhesive layer between the gasket and the base. The adhesive layer may be in addition to the retainer.

In some examples, the cap comprises a groove, wherein the retainer is received in the groove when the cap is in the closed position.

In some examples, the retainer is between the first seal and the second seal in the closed position. In some examples, the groove is between the first and the second seal in the closed position.

In some examples, a portion of the gasket extends beyond the base to permit the gasket to flex during movement of the cap from the open position to the closed position. In some examples, the base comprises a bevelled edge to permit the gasket to extend beyond the base and to flex.

In some examples, the cap comprises a bias component fixed to the base, the bias component configured to bias the cap towards the closed position, the bias component configured such that the cap moves to the open position when a pressure in the vessel exceeds a pressure threshold.

In some examples, the base comprises a cut-out to receive the bias component.

In some examples, the bias component extends from the base in a direction away from the cap.

In some examples, the cap comprises a bias connector, the bias connector extending through the base to connect to the bias component.

In some examples, the bias component is a spring connected between the base and the cap.

According to a second aspect of this disclosure there is provided a system comprising a pressure vessel and a pressure relief valve as described above, the pressure vessel comprising a vessel aperture, wherein the pressure relief valve is attached to the vessel at the vessel aperture

According to a third aspect of this disclosure there is provided a method of sealing a vessel aperture of a pressure vessel, the method comprising:
attaching a pressure relief valve to the pressure vessel at the vessel aperture, the pressure relief valve comprising a base face facing away from the vessel, a cap face facing towards the vessel and a gasket between the base face and the cap face; moving the cap into a closed position to seal the vessel aperture, wherein in the closed position the base face and the cap face contact the gasket at a first location to form a first seal and at a second location to form a second seal.

The system of the second aspect may comprise any of the features described with respect to the pressure relief valve of the first aspect. The method of the third aspect may include any of the functional steps described with respect to the first and second aspects.

The present invention will be further described and explained by way of example with reference to the accompanying drawings in which
Fig. 1 shows an exploded view of a pressure relief valve;
Fig. 2a shows a cross-sectional view of a system comprising the pressure relief valve with a cap in a closed position;
Fig. 2b shows a cross-sectional view of the system with the cap in an open position; and
Fig. 2c shows a cross-sectional view of a system comprising the pressure relief valve with the cap in an intermediate position.

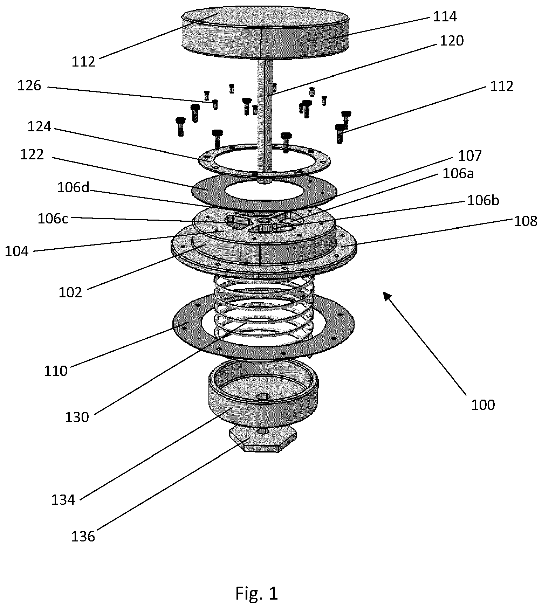

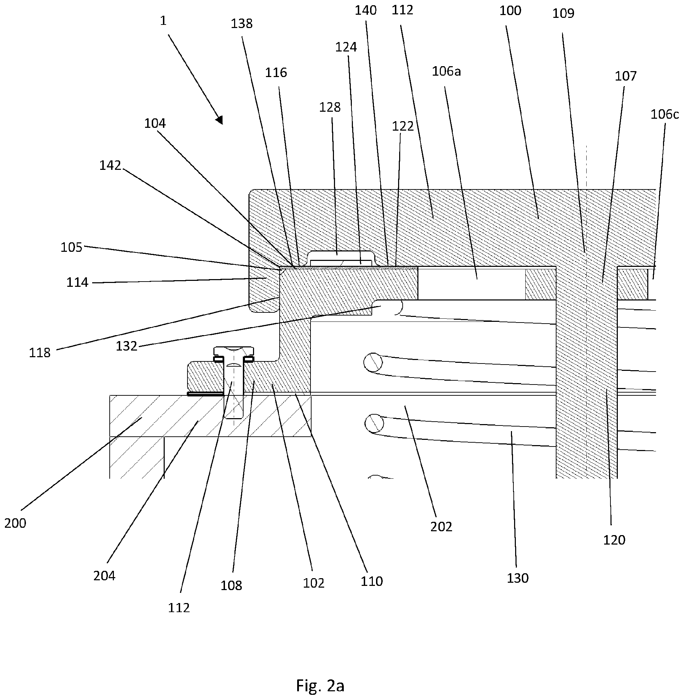

With reference to Fig. 1 and Fig. 2a-c, a system 1 comprises a pressure relief valve 100 and a pressure vessel 200. The pressure vessel 200 comprises a vessel aperture 202, which permits fluid communication between the pressure vessel 200 and outside the pressure vessel 200 to relieve high pressure in the pressure vessel 200. The vessel aperture 202 is substantially circular.

The pressure relief valve 100 comprises a base 102. The base 102 comprises a flange 108 and a base fixing 112. The base 102 is attached to the pressure vessel 200 at the vessel aperture 202. The base 102 covers the vessel aperture 202. The flange 108 surrounds the vessel aperture 202. The base 102 is fixed to the pressure vessel 200 by the flange 108 and the base fixing 112. The base fixing 112 comprises screws which are screwed into a wall 204 of the pressure vessel 200 through apertures in the flange 108. The flange 108 is integrally formed with the base 102.

The pressure relief valve 100 comprises a first gasket 110. The first gasket 110 is received between the base 102 and the wall 204 of the pressure vessel 200. The base fixing 112 extends through the first gasket 110 to attach the base 102 to the pressure vessel 200. The base 102 is sealed to the pressure vessel 200, such that there is no fluid flow between the base 102 and the pressure vessel 200. The first gasket 110 is compressed between the base 102 and the pressure vessel 200. The first gasket 110 improves sealing between the base 102 and the pressure vessel 200.

The base 102 comprises a base face 104. The base face 104 faces away from the pressure vessel 200. The base face 104 is substantially parallel to a plane of the vessel aperture 202. The base face 104 is substantially circular. The base face 104 is offset from the wall 204 of the pressure vessel. The base face 104 is substantially planar.

The base 102 comprises a bevelled edge 105. The bevelled edge 105 defines an outer perimeter of the base face 104.

The base 102 comprises fluid apertures 106a-d. The fluid apertures 106a-d extend through the base 102. The fluid apertures 106a-d are in fluid communication with the vessel aperture 202. The fluid apertures 106a-d are formed in the base face 104. The fluid apertures 106a-d extend through the base 102 from the vessel aperture 202 to the base face 104. The fluid apertures 106a-d are offset from each other in a circumferential direction. The base 102 comprises four fluid apertures 1 06a-d.

The base 102 comprises a bias connector aperture 107. The bias connector aperture 107 is formed in the base face 104. The bias connector aperture 107 extends through the base 102 from the vessel aperture 202 to the base face 104. The bias connector aperture 107 is formed at a centre of the base face 104. The bias connector aperture 107 is substantially circular. The bias connector aperture 107 and the base face 104 are substantially concentric. The bias connector aperture 107 is radially inward of the fluid apertures 106a-d.

The bias connector aperture 107 defines at its centre an axis 109 of the pressure relief valve 100. The axis 109 is aligned with a centre of the vessel aperture 202. The axis 109 is normal to the plane of the vessel aperture 202.

The axis 109 defines an axial direction (i.e. parallel to the axis), a radial direction (i.e. radially outward from the axis) and the circumferential direction (i.e. around the axis normal to the axial direction and the radial direction).

The pressure relief valve 100 comprises a cap 112. The cap 112 is offset from the base 104 in a direction outward from the pressure vessel 200. The cap 112 comprises a cap face 116. The cap face 116 faces towards the pressure vessel 200. The cap face 116 faces towards the base face 104. The cap face 116 is substantially parallel to a plane of the vessel aperture 202. The cap face 116 is substantially parallel to the base face 104. The cap face 116 is substantially circular. The cap face 116 is aligned with the base face 104, such that an outer perimeter of the cap face 116 aligns with that of the base face 104.

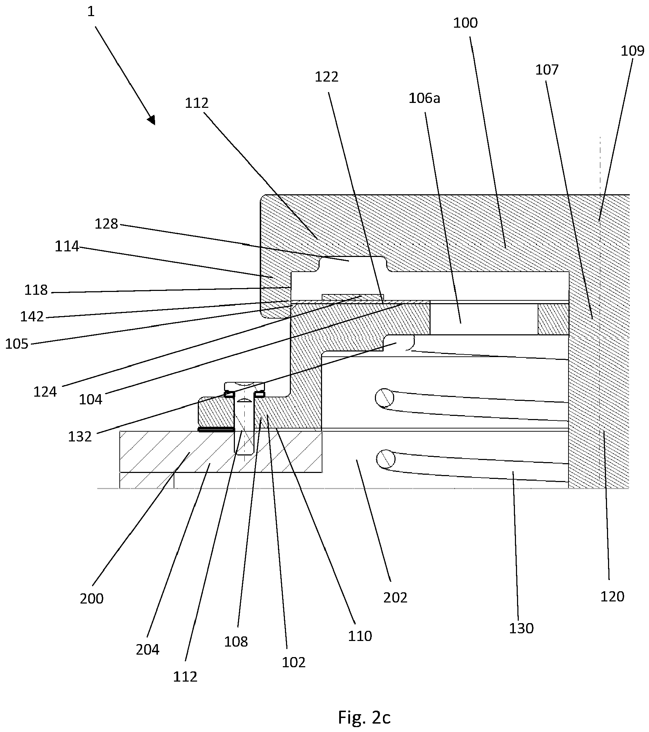

The cap 112 comprises a skirt 114. The skirt 114 extends from the cap 112 towards the pressure vessel 200. The skirt 114 extends circumferentially around the cap face 116. The skirt 114 extends around the full perimeter of the cap face 116. In use, when the cap 112 is in the closed position (as shown in fig. 2a and described in more detail below) or in the intermediate position (as shown in fig. 2c and described in more detail below), the skirt 114 surrounds the base 102.

The cap 112 comprises a side face 118. The side face 118 is formed on a radially inner surface of the skirt 114. When the cap 112 is in the closed position or the intermediate position, the side face 118 is adjacent to the base 102.

The cap 112 comprises a bias connector 120. The bias connector 120 extends from the cap 112 through the bias connector aperture 107 towards the pressure vessel 200. The bias connector 120 extends through the pressure vessel aperture 202 and into the pressure vessel 200. The bias connector 120 is elongate. The bias connector 120 has a substantially circular cross section. The bias connector 120 is positioned at a centre of the cap 112. The bias connector 120 is integrally formed with the cap 112.

The pressure relief valve 100 comprises a second gasket 122. The second gasket 122 is positioned between the base face 104 and the cap face 116. The second gasket 122 is a flat gasket. The second gasket 122 is substantially planar. The second gasket 122 is significantly thinner than it is wide. The second gasket 122 is annular. The second gasket 122 is axially aligned with the base 102 and the cap 112.

The second gasket 122 comprises a radially outer perimeter, which is in contact with the side surface 118 when the cap 112 is in the closed position or the intermediate position. The second gasket 122 extends to the bevelled edge 105 of the base face 104. The second gasket 122 is unsupported by the base face 104 at the bevelled edge 105, permitting the second gasket 122 to flex at the bevelled edge 105. An inner perimeter of the second gasket 122 is radially outward of the fluid apertures 106a-d. The second gasket 122 is flexible.

The pressure relief valve 200 comprises a retainer 124. The retainer 124 fixes the second gasket 124 to the base 102. The retainer 124 fixes the second gasket 124 to the base face 104. The pressure relief valve 200 comprises a retainer fixing 126, which fixes the second gasket 124 to the base 102. The retainer fixing 126 comprises screws. The retainer 124 is annular and is concentric with the second gasket 122. An outer perimeter of the retainer is radially inward of that of the second gasket 122. An inner perimeter of the retainer 124 is radially outward of that of the second gasket 122. The second gasket 122 extends beyond the retainer 124 in both radially inward and radially outward directions.

The cap face 116 comprises an annular groove 128. The retainer 124 is located in the annular groove 128 when the cap 112 is in the closed position.

The pressure relief valve 100 comprises a bias component 130. The bias component 130 is a spring. The bias component 130 is connected to the base 104. The bias component 130 extends from the base 104 towards the pressure vessel 200.

The base 104 comprises a recess 132, which receives a first end of the bias component 130. The bias component 130 is under compression, with the base 104 resisting the compression to hold the bias component 130 in position.

The pressure relief valve 100 comprises a holder 134. The holder 134 is cup shaped. The holder 134 connects to the bias connector 120. The pressure relief valve 100 comprises a nut 136. The nut 136 receives an end of the bias connector 120 and fixes the holder 134 in position. The nut 136 may be used to adjust the biasing force of the bias component 130. The holder 134 receives a second end of the bias component 130. The holder 134 resists the compression of the bias component 130 to hold the bias component 130 in position.

The bias component 130 is held in compression between the holder 134 and the base 104. The bias component 130 biases the cap 112 towards the base 104. The bias component 130 biases the cap 112 towards the closed position.

With reference to Fig. 2a, when the cap 112 is in the closed position, the cap 112 seals the vessel aperture 202. The cap face 116 contacts the second gasket 122 at a first location 138. The cap face 116 contacts the second gasket 122 at a second location 140. The base face 104 contacts the second gasket 122 at the first location 138. The base face 104 contacts the second gasket 122 at the second location 140.

The second gasket 122 is compressed between the cap face 116 and the base face 104 at the first location 138 to form a first seal. The second gasket 122 is compressed between the cap face 116 and the base face 104 at the second location 140 to form a second seal.

The first location 138 comprises a first line which encircles the fluid apertures 106a-d. The first line is substantially circular. The second location 140 comprises a second line which encircles the fluid apertures 106a-d. The second line is substantially circular. The first location 138 is radially outward of the second location 140.

The second location 140 is radially inward of the retainer 128. The second location is radially inward of the groove 128. The first location 138 is radially outward of the retainer 128. The first location is radially outward of the groove 128. The retainer 128 is between the first location 138 and the second location 140. The groove 128 is between the first location 138 and the second location 140.

The first location 138 and the second location 140 lie in a sealing plane. The sealing plane is substantially parallel to a plane of the vessel aperture 202. The sealing plane is substantially normal to the axis 109. Contact between the cap face 116 and the second gasket 122 is in the sealing plane at both the first and second locations 138, 140.

The second gasket 122 contacts the side face 118 to form a third seal 142. The third seal 142 is formed in different plane to the first and second seals, between faces which are not parallel to those which form the first and second seals i.e. not parallel to the cap face 116 and the base face 104. The third seal 142 is formed between a radial outer edge of the second gasket 122 and the side face 118.

When the cap 112 is in the closed position, the first, second and third seals seal the vessel aperture 202. Having first and second seals improves the sealing of the vessel aperture 202, in particular in response to one of the first and second seals failing, for example due to deformation of the second gasket 122. The third seal 142 improves the reliability of the sealing further, in particular due to the third seal 142 being formed in a different plane from the first and second seals.

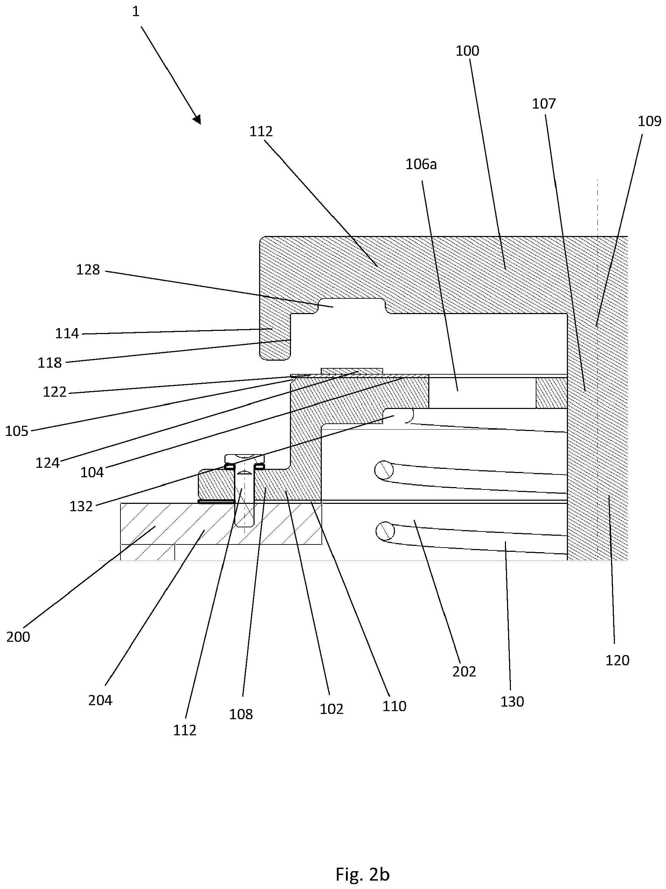

The cap 112 is biased towards the closed position by the bias component 130. However, the cap 112 is movable from the closed position (as shown in Fig. 2a) to an open position (as shown in Fig. 2b). The cap 112 translates from the closed position to the open position in the axial direction.

In use, in response to pressure in the pressure vessel 200 exceeding a pressure threshold, the cap 112 moves to the open position. The pressure in the pressure vessel 200 acts on the cap 112 to overcome the force provided by the bias component 130 to slide the cap 112 to the open position.

With reference to Fig. 2b, when the cap 112 is in the open position, the cap 112 is displaced relative to the base 104, such that the cap face 106 is not in contact with the second gasket 122. In the open position the first seal is broken. In the open position the second seal is broken. Additionally, the movement of the cap 112 causes the skirt 114 to move beyond the base 104, such that the skirt 114 no longer surrounds the base. The skirt 114 is also beyond the second gasket 122, such that the second gasket 122 is no longer in contact with the side face 118, and the third seal is broken.

The retainer 124 maintains the second gasket 122 in position on the base face 104, reducing the likelihood of the second gasket 122 being damaged.

When the cap 112 is in the open position, the vessel aperture 202 is not sealed by the pressure vessel 100 (due to the first, second and third seals being broken) and fluid flow through the vessel aperture 202 is permitted. This allows fluid to flow out of the pressure vessel 200, relieving pressure in the vessel.

When the pressure in the pressure vessel 200 drops to a second pressure threshold (lower than the pressure threshold described above), the bias component 130 forces the cap 112 back into the closed position.

Fig. 2c shows the cap 112 in the intermediate position. The cap 112 moves into the intermediate position in response to the pressure in the pressure vessel 200 increasing enough to begin overcoming the force provided by the bias component 130 but not to reach the pressure threshold.

In the intermediate position, the cap 112 is displaced relative to the base 104 such that the cap face 106 is not in contact with the second gasket 122 and the first and second seals are broken. However, the skirt 114 continues to surround the second gasket 122, such that second gasket 122 remains in contact with the side face 118 and the third seal 142 is maintained. The pressure relief valve 100 therefore remains sealed and prevents fluid flow through the vessel aperture 202 when the cap 112 is in the intermediate position.

In some examples, some fluid flow from the pressure vessel 200 to the outside may be permitted when the cap 112 is in the intermediate position, for example due to deformation of the second gasket 122. Such fluid flow may be at a low flow rate, but may permit the pressure in the pressure vessel 200 to drop to a normal level such that the cap 112 can return to the closed position.

As the cap 112 moves from the closed position to the intermediate position, the second gasket 122 is permitted to flex by the bevelled edge 105. This reduces the likelihood of the second gasket 122 being damaged and improves the reliability of the third seal 142.

Various aspects of the pressure relief valve disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A pressure relief valve for a pressure vessel, the pressure relief valve comprising:
a base attachable to the pressure vessel at a vessel aperture, the base comprising a base face, the base face facing away from the vessel;
a cap comprising a cap face, the cap face facing towards the vessel, the cap movable between an open position and a closed position, wherein in the closed position the cap seals the vessel aperture and in the open position flow through the vessel aperture is permitted to relieve pressure in the pressure vessel; and
a gasket between the base face and the cap face,
wherein in the closed position:
the base face and the cap face contact the gasket at a first location to form a first seal; and
the base face and the cap face contact the gasket at a second location to form a second seal.

2. A pressure relief valve according to claim 1, wherein the gasket is a flat gasket.

3. A pressure relief valve according to claim 1 or 2, wherein the first location and the second location lie in a sealing plane, wherein the sealing plane is substantially parallel to a plane of the vessel aperture.

4. A pressure relief valve according to any of the preceding claims, wherein the pressure relief valve is configured to form a third seal, the third seal formed between faces aligned to a plane that is not parallel to that of the first and second seals.

5. A pressure relief valve according to any of claim 4, wherein the cap is movable to an intermediate position between the open and closed positions, wherein in the intermediate position the first and second seals are broken but the third seal is maintained.

6. A pressure relief valve according to claim 4 or 5 and comprising a side face, the side face extending away from the aperture, wherein in the closed position an edge of the gasket contacts the side face to form the third seal.

7. A pressure relief valve according to claim 6, wherein the cap comprises the side face.

8. A pressure relief valve according to claim 7, wherein the cap comprises a skirt, wherein in the closed position the skirt surrounds the base and the side face is an inner face of the skirt.

9. A pressure relief valve according to any of claims 6 to 8, wherein the edge of the gasket is configured to flex during movement of the cap from the open position to the closed position.

10. A pressure relief valve according to any of claims 1 to 9 and comprising a retainer, the retainer fixing the gasket to the base.

11. A pressure relief valve according to claim 10, wherein the cap comprises a groove, wherein the retainer is received in the groove when the cap is in the closed position.

12. A pressure relief valve according to claim 10 or 11, wherein the retainer is between the first seal and the second seal in the closed position.

13. A pressure relief valve according to any of claims 1 to 12 and comprising a bias component fixed to the base, the bias component configured to bias the cap towards the closed position, the bias component configured such that the cap moves to the open position when a pressure in the vessel exceeds a pressure threshold.

14. A system comprising a pressure vessel and a pressure relief valve according to any of claims 1 to 13, the pressure vessel comprising a vessel aperture, wherein the pressure relief valve is attached to the vessel at the vessel aperture.

15. A method of sealing a vessel aperture of a pressure vessel, the method comprising:
attaching a pressure relief valve to the pressure vessel at the vessel aperture, the pressure relief valve comprising a base face facing away from the vessel, a cap face facing towards the vessel and a gasket between the base face and the cap face;
moving the cap into a closed position to seal the vessel aperture, wherein in the closed position the base face and the cap face contact the gasket at a first location to form a first seal and at a second location to form a second seal.
